# EUROPEAN PATENT SPECIFICATION

(11) **EP 0 864 487 B1**
(45) Date of publication and mention of the grant of the patent: **10.11.1999**
(21) Application number: 98104525.5
(22) Date of filing: 12.03.1998
(51) Int. Cl.: B62J 35/00, B60K 15/073

(54) **Fuel tank apparatus for motorcycle**
Kraftstofftankeinrichtung für Motorrad
Dispositif de réservoir à carburant pour motocycle

(30) Priority: 14.03.1997 JP 6113497
(43) Date of publication of application: 16.09.1998
(73) Proprietor: SUZUKI KABUSHIKI KAISHA, Shizuoka-Ken (JP)
(72) Inventor: Tokunaga, Katsuhiko, Hamakita-Shi, Shizuoka-Ken (JP)
(74) Representative: Klunker . Schmitt-Nilson . Hirsch

(56) References cited:
- PATENT ABSTRACTS OF JAPAN vol. 17, no. 77 (M-1367), 16 February 1993 & JP 04 278890 A (SUZUKI), 5 October 1992,
- PATENT ABSTRACTS OF JAPAN vol. 17, no. 288 (M-1423), 3 June 1993 & JP 05 016855 A (SUZUKI), 26 January 1993,

## Description

### BACKGROUND OF THE INVENTION

The present invention relates to a fuel tank apparatus for a motorcycle.

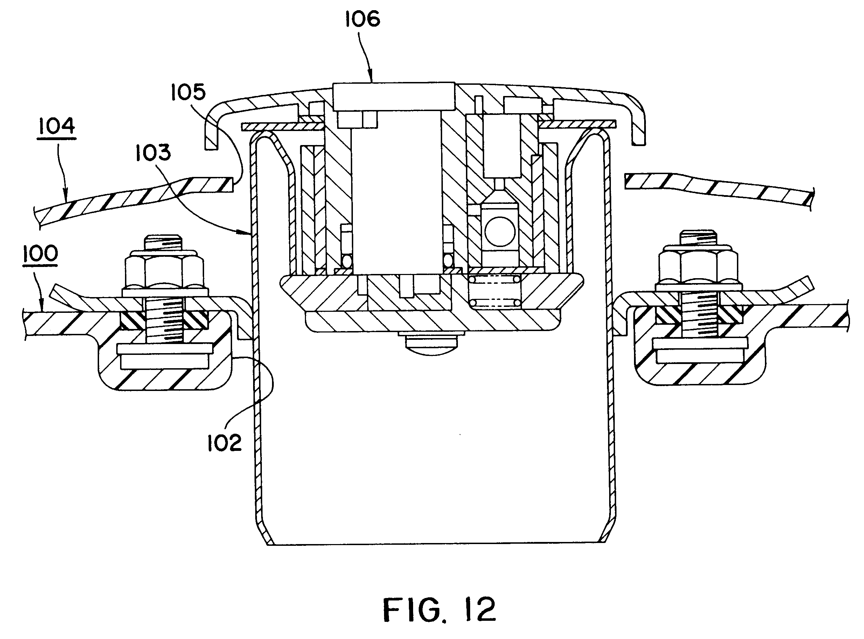

There is a known fuel tank apparatus for a motorcycle, in which a tank body is formed of synthetic resin material and an outside of the tank body is covered with a separate tank cover. In the case of such a fuel tank apparatus, as shown in Fig. 12, an inlet tube 103 of an oil supply port 102 formed at an upper portion of a tank body 100 projects upward from an inlet tube insertion hole 105 formed in a tank cover 104, and the inlet tube 103 is closed by an inlet cap 106. Therefore, the inlet tube insertion hole 105 of the tank cover 104 is prevented from falling off from the inlet tube 103 by the inlet cap 106.

However, since such a fuel tank apparatus is not provided with a structure for positioning the inlet tube insertion hole 105 of the tank cover 104 with respect to the inlet tube 103, the center of the inlet tube insertion hole 105 and the center of the inlet tube 103 are offset from each other and, hence, an outer appearance of the fuel tank apparatus may be spoiled.

Further, when a rider drives a motorcycle such that the rider grips or sandwiches the fuel tank apparatus between his knees (at the time of knee-grip driving), there is a possibility that the tank cover 104 may float up and bumps against the inlet cap 106 and as a result, a sealing of the inlet cap 106 may be deteriorated or the tank cover 104 may be damaged.

### SUMMARY OF THE INVENTION

An object of the present invention is to substantially eliminate defects or drawbacks encountered in the prior art described above and to provide a fuel tank apparatus for a motorcycle capable of accurately positioning an inlet tube insertion hole of a tank cover which covers a tank body with respect to the inlet tube of an oil supply port and preventing the tank cover from floating up.

Another object of the invention is to provide a fuel tank for a motorcycle capable of preventing the tank cover from being damaged even if the tank cover should float up from the tank body.

These and other objects can be achieved according to the present invention by mainly providing a fuel tank apparatus for a motorcycle which is disposed between bilateral body frames of the motorcycle, in a standing state thereof, and comprises a tank body, a tank cover formed independently from the tank body, an oil supply port formed to an upper portion of the tank body and an inlet tube provided for the oil supply port so as to project upward from an inlet tube insertion hole formed to the tank cover and closed by an inlet cap, the fuel tank apparatus being characterized in that a cylindrical inlet sleeve made of an elastic material is mounted to the inlet tube insertion hole, the inlet sleeve being formed with a fitting groove at an outer periphery of the inlet sleeve so as to extend in a circumferential direction thereof, the fitting groove being fitted to an inner periphery of the inlet tube insertion hole in a manner that an inner diameter portion of the inlet sleeve is tightly inserted in an outer periphery of the inlet tube so that a lower end portion of the inlet sleeve abuts against an upper surface of the tank body, and the inlet tube is provided at an outer peripheral surface thereof with a stopper member mounted to the inlet tube at a portion above the tank cover to project in a horizontal direction.

In preferred embodiments, the inlet sleeve is formed, at an outer peripheral portion thereof, with upper and lower flange portions so as to define the fitting groove between the flange portions, the upper flange portion having an outer diameter being set larger than the maximum outer diameter portion of the inlet cap. The inlet sleeve is formed with a cutout portion so as to provide a cut-away portion to the lower flange portion.

A plurality of ribs are formed to the peripheral portion of the inlet sleeve so as to extend in an axial direction thereof.

The upper flanged portion is formed at a lower surface thereof with an arch-shaped recess in alignment with the cutout portion.

The stopper member has a plate structure and includes a fixing piece arranged along the inlet tube, a claw-shaped stopper piece formed by bending an upper portion of the fixing piece so as to project in a horizontal direction and an abutting piece formed by swelling a lower portion of the fixing piece rearward. The fixing piece is formed at a central portion thereof with a wedge-shaped rib extending in a vertical direction and the stopper piece has a tongue piece formed at a tip end portion thereof.

According to the present invention of the structure mentioned above, the relative movements, between the inlet tube of the tank body and the inlet tube insertion hole of the tank cover in longitudinal, lateral and vertical directions, are restricted by the location of the inlet sleeve, so that the inlet tube insertion hole can be accurately positioned with respect to the inlet tube, and the tank cover can be prevented from floating up by the stopper member. Furthermore, since the flange portion is provided for the inlet sleeve at a portion between the tank cover and the maximum outer diameter portion of the inlet cap, even if the tank cover should float up from the tank body, the tank cover itself does not abut directly against the inlet cap, whereby the tank cover is prevented from being damaged.

The nature and further characteristic features of the present invention will be made more clear from the following descriptions made with reference to the accompanying drawings.

### BRIEF DESCRIPTION OF THE DRAWINGS

In the accompanying drawings:
Fig. 1 is a left side view showing one example of a motorcycle to which a fuel tank apparatus according to the present invention is applied;
Fig. 2 is a perspective view of a tank body;
Fig. 3 is a left side view of a tank cover;
Fig. 4 is a longitudinal sectional view taken along the line A-O-B in Fig. 5, showing a tank body and a front portion of a tank cover;
Fig. 5 is a plan view of an inlet tube;
Fig. 6 is a longitudinal sectional view in the vicinity of an oil supply port taken along the line A-O-C in Fig. 5, showing one embodiment of the present invention;
Fig. 7 is a plan view of an inlet sleeve;
Fig. 8 is a rear view of an inlet sleeve;
Fig. 9 is a bottom view of an inlet sleeve;
Fig. 10 is an enlarged longitudinal sectional view of a stopper plate;
Fig. 11 is a transverse sectional view taken along the line XI-XI in Fig. 10; and
Fig. 12 is a longitudinal sectional view in the vicinity of an oil supply port for showing a prior art.

### DESCRIPTION OF THE PREFERRED EMBODIMENTS

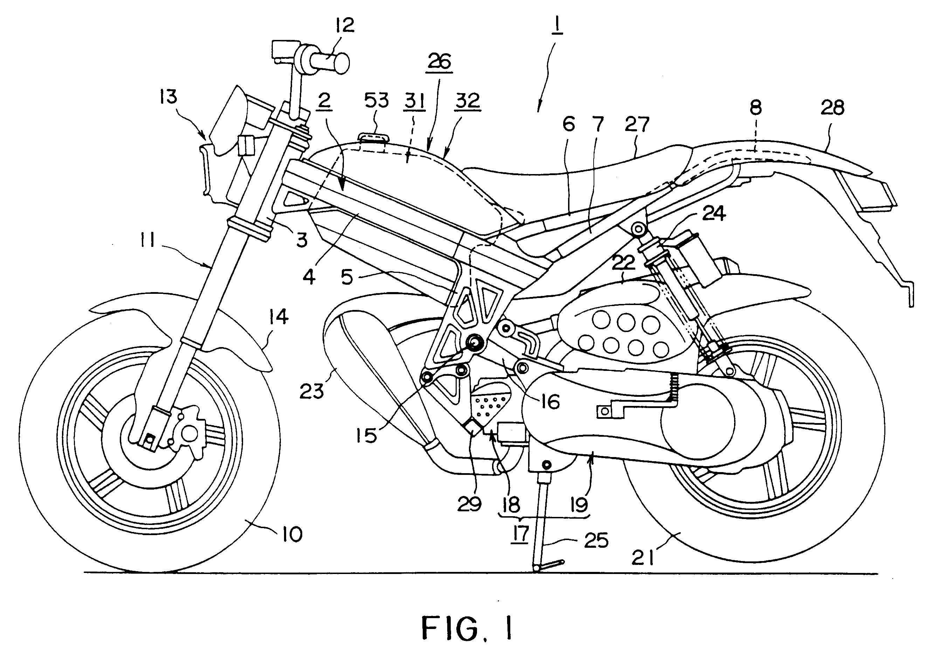

An embodiment of the present invention will be described hereunder with reference to the accompanying drawings. Fig. 1 is a left side view showing one example of a motorcycle to which a fuel tank apparatus of the present invention is applied.

A motorcycle 1 includes a twin-tube-type body frame 2. The body frame 2 includes a head tube 3 located at a front head portion of the vehicle frame 2, a pair of left and right tank tubes 4 (twin tubes) extending rearward and downward from the head tube 3 and each having thick sectional surface, a pair of left and right engine plates 5 provided at rear ends of the tank tubes 4, respectively, a pair of left and right upper tubes 6 and lower tubes 7 extending rearward and upward from the engine plates 5, and a rear tube 8. The left and right engine plates 5, as well as the upper tubes 6, are connected together through bridge members which are not shown.

A front fork 11 for supporting a front wheel 10 is pivotally supported on the head tube 3 of the body frame 2 for turning movement in a lateral direction together with a handle bar 12, lights 13, a front fender 14 and the like. A pivot shaft 15 is provided between the left and right engine plates 5, and a power unit 17 is connected to the pivot shaft 15 through a link 16 for turning movement in a vertical direction.

The power unit 17 has a structure integrally composed of a small-size engine 18 and a unit case 19 in which a V-belt type continuously variable transmission, a speed-reduction transmission and the like are accommodated. A rear wheel 21 is directly pivotally supported at a rear portion of the unit case 19. An intake apparatus is denoted by a reference number 22 and an exhaust muffler is denoted by a reference number 23.

The rear portion of the unit case 19 and the lower tube 7 of the body frame 2 are connected through a shock absorber 24, so that vertical motions of the power unit 17 and the rear wheel 21 at the time of running are buffered and restored by expansion and contraction of the shock absorber 24. The unit case 19 is provided at its bottom with a kickstand device 25.

The tank tubes 4 of the body frame 2 are provided with a fuel tank apparatus 26 which will be described later. The fuel tank apparatus 26 is provided at its rear portion with a seat 27 and a rear fender 28 sequentially. Foot rests 29 on which a rider put the feet thereon are mounted to lower portions of the engine plates 5 of the body frame 2.

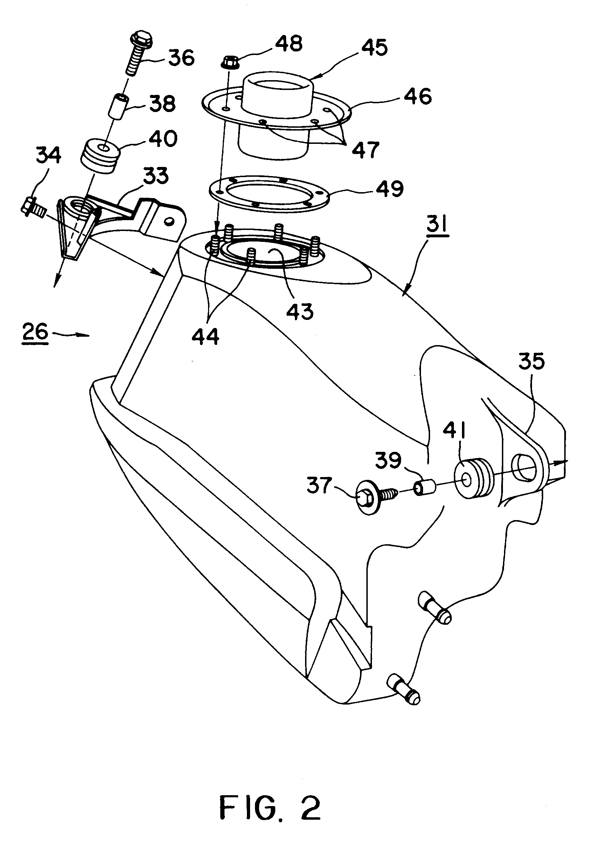

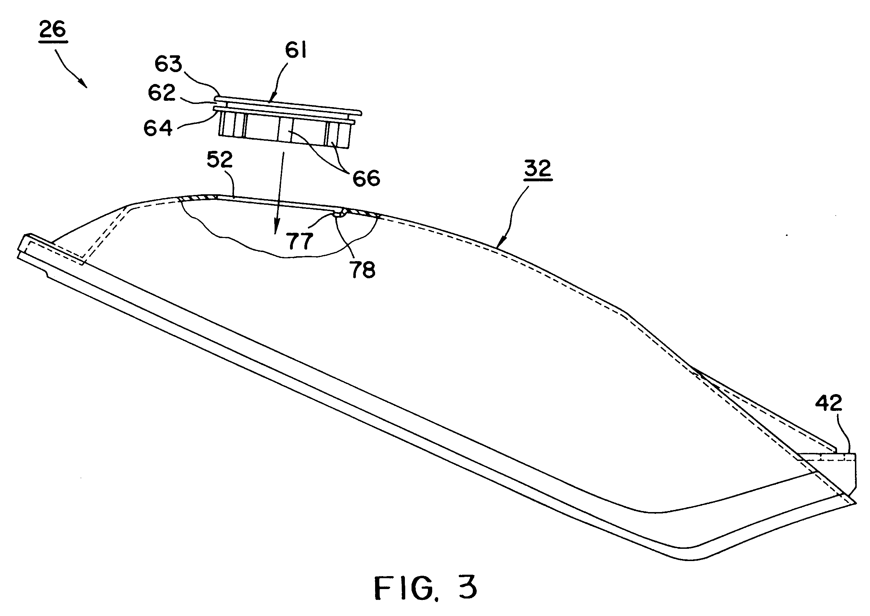

The fuel tank apparatus 26 includes a tank body 31 (see Fig. 2) integrally formed of synthetic resin and a separate tank cover 32 (see Fig. 3) made of synthetic resin for covering an upper portion of the tank body 31. The fuel tank apparatus 26 is fabricated in the following manner.

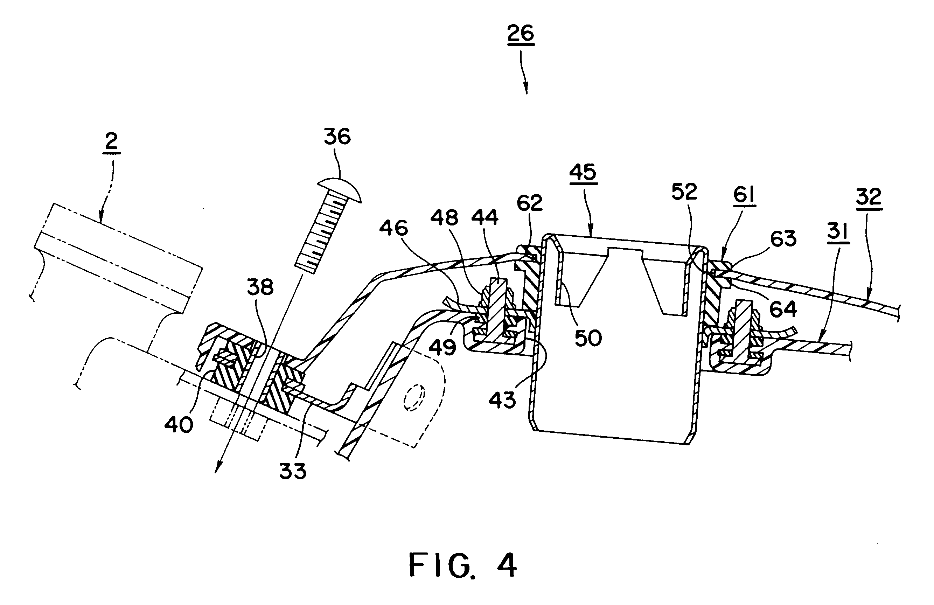

First, the tank body 31 is formed into a shape sandwiched between the left and right tank tubes 4 of the body frame 2. As shown in Fig. 4, a front bracket 33 is fixed to a front portion of the tank body 31 by two screws 34, and the tank body 31 is integrally formed at its rear portion with a rear bracket 35.

A front end of the front bracket 33 is fixed, together with a front end of the tank cover 32, to a front portion of the body frame 2 by means of screw 36. The rear bracket 35 is fixed to an intermediate portion of the body frame 2 by means of screw 37. The screws 36 and 37 are inserted to spacers 38 and 39 and rubber cushion members 40 and 41, respectively, and peripheral portions of the cushion members 40 and 41 are fitted to the front bracket 33 and the rear bracket 35 of the tank body 31. Therefore, the tank body 31 is fixed with respect to the body frame 2 in an anti-vibration manner (floating manner). The tank cover 32 is provided at its rear end with a pair of left and right fastening seats 42 which are fixed to the body frame 2 by means screws (not shown).

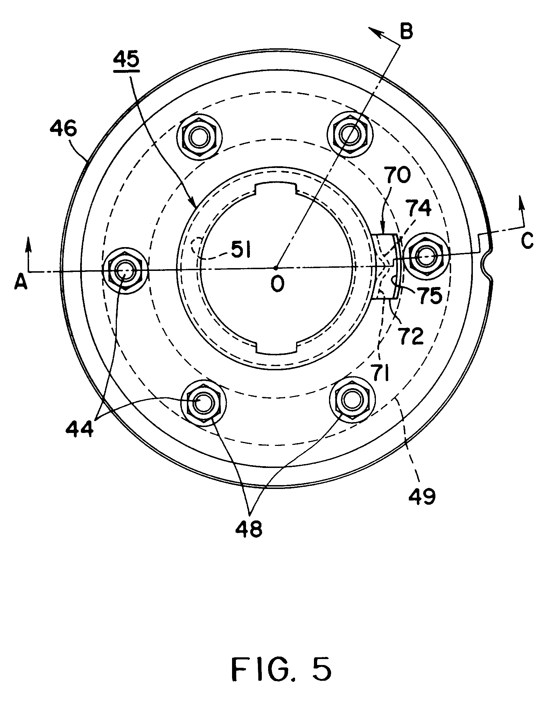

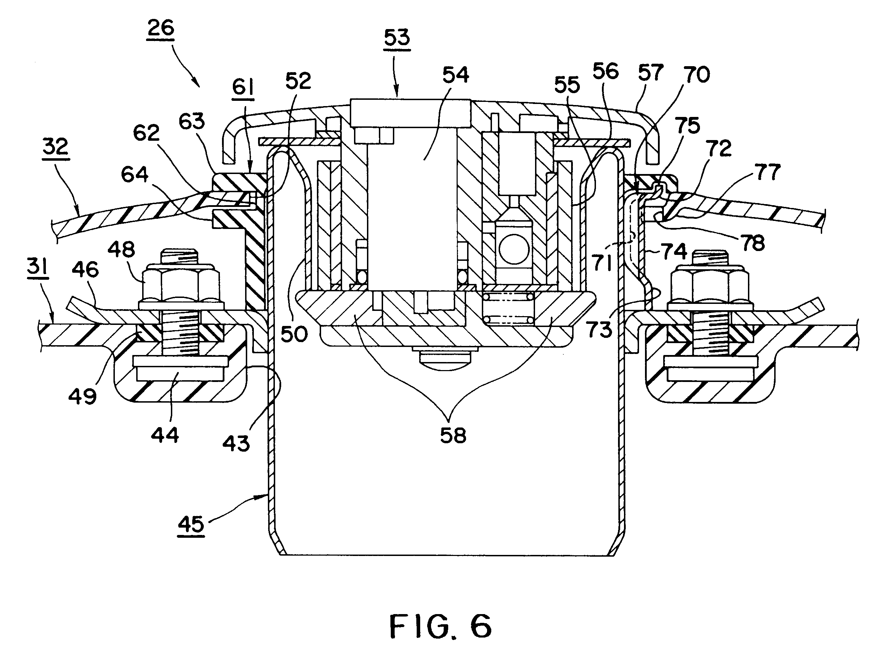

The tank body 31 is provided at its upper portion with an oil supply port 43, and a plurality of insert bolts 44 (six in Fig. 2) are embedded around the oil supply ports 43 so as to project upward. An inlet tube 45 is inserted in the oil supply port 43 by a length about a half of the entire length thereof and fixed thereto. Fig. 5 is a plan view of the inlet tube 45. Figs. 4 and 6 are longitudinal sectional views taken along the lines A-O-B and A-O-C in Fig. 5, respectively.

As shown in Figs. 5 and 6, a large-diameter brimmed fixing flange 46 is fixed to an intermediate portion of the inlet tube 45. The six insert bolts 44 around the oil supply port 43 are inserted into six bolt holes 47 (see Fig. 2) formed in the fixing flange 46 and are fastened by means of nuts 48. An annular rubber gasket 49 is interposed between the fixing flange 46 and the tank body 31 for sealing a gap therebetween. An upper portion of the inlet tube 45 is folded inside downward to form a double tube portion 50.

An inlet tube insertion hole 52 is formed in the tank cover 32 in alignment with a position of the inlet tube 45, such that when the tank body 31 is covered with the tank cover 32, the inlet tube 45 projects upward from the inset tube insertion hole 52. The inlet tube insertion hole 52 has a circular shape having a diameter in the longitudinal direction of the motorcycle body longer than that in the width direction thereof, and an upper opening of the inlet tube 45 is closed by an inlet cap 53.

The inlet cap 53 is of a lock-type including a key cylinder 54 for example. The inlet cap 53 includes a lock cylinder 55 to be inserted in the double tube portion 50 of the inlet tube 45, a lid 56 which is tightly contacted to an upper end of the inlet tube 45 for closing the latter, and a grip 57 for covering the lid 56. When the lock cylinder 55 of the inlet cap 53 is inserted into the inlet tube 45 and the grip 57 is held from the above, a pair of lock bars 58 provided at a lower end of the lock cylinder 55 are projected in a horizontal direction and are locked to an lower end of the double tube portion 50 of the inlet tube 45, whereby the inlet chap 53 is prevented from falling off. When the inlet cap 53 is to be detached, an exclusive key is inserted into a key cylinder 54 and turned, and the lock bars 58 are then pulled so that the inlet cap 53 can be detached.

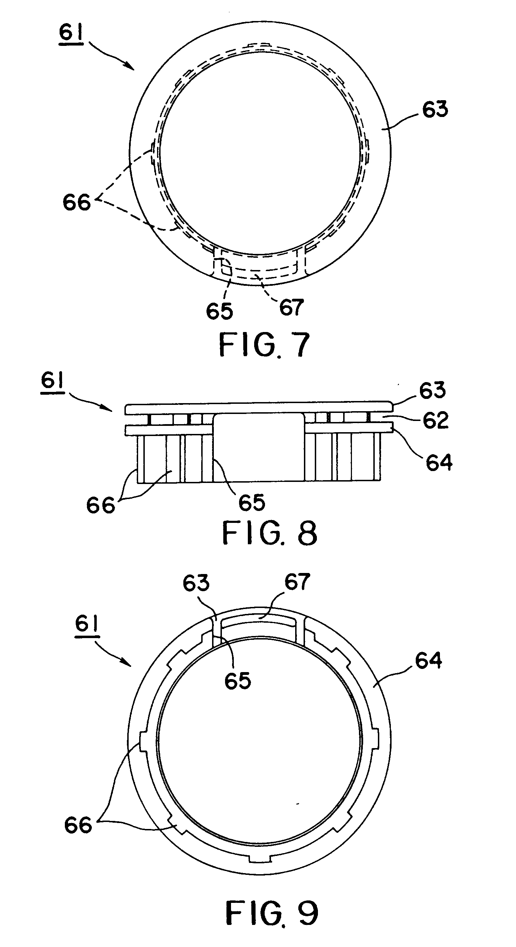

As shown in Figs. 3, 4 and 6, an inlet sleeve 61 formed of an elastic material such as a rubber is mounted to the inlet tube insertion hole 52 of the tank cover 32. Figs. 7, 8 and 9 are a plan view, a rear view and a bottom view of the inlet sleeve 61, respectively.

The inlet sleeve 61 is formed into a short cylindrical shape and is formed at its outer periphery with a fitting groove 62 extending in a circumferential direction thereof. The fitting groove 62 is formed between upper and lower two flange portions 63 and 64 formed around the upper outer periphery of the inlet sleeve 61. Outer diameters of the flange portions 63 and 64 are made to be larger than that of the grip 57 which is a maximum outer diameter portion of the inlet cap 53. The inlet sleeve 61 is formed at its rear portion with a gate-shaped notch 65 in a manner such that the lower flange portion 64 is cut away by the notch 65. Further, a large number of press-fit ribs 66 are formed around the outer periphery of the inlet sleeve 61 so as to extend in an axial direction thereof. The upper flange portion 63 is formed at its lower surface with an arch-like recess 67 in alignment with the notch 65.

The fitting groove 62 of the inlet sleeve 61 is fitted into an inner periphery of the inlet tube insertion hole 52 of the tank cover 32. At that time, the inlet sleeve 61 is inserted into the inner periphery of the inlet tube insertion hole 52 such that the gate-shaped notch 65 faces rearward. An inner diameter portion 68 of the inlet sleeve 61 is tightly inserted in the outer periphery of the inlet tube 45, and the inlet sleeve 61 is pushed together with the tank cover 32 into the inlet tube 45 until a lower end of the inlet sleeve 61 abuts against an upper surface of the tank body 31 (herein, i.e., an upper surface of the fixing flange 46).

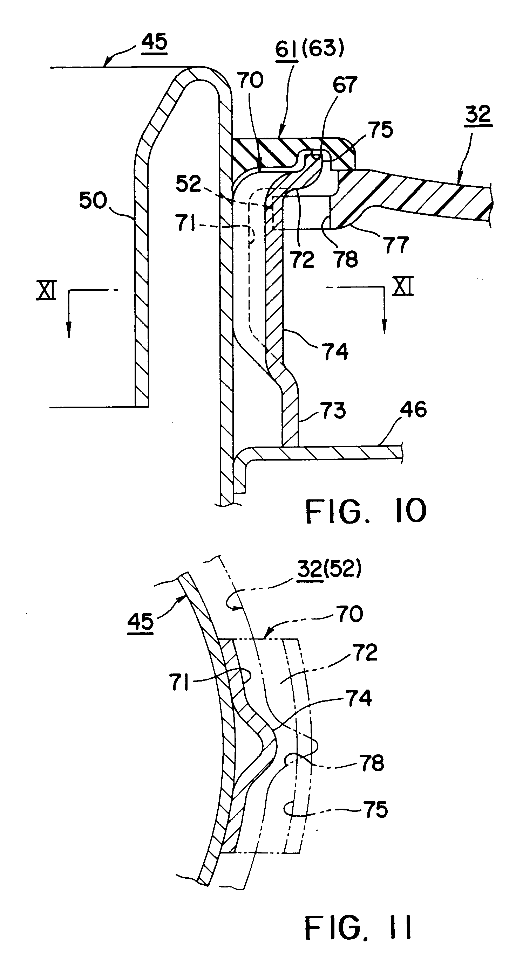

As shown in Figs. 5, 6, 10 and 11, a stopper plate 70 is mounted to a rear side of an outer peripheral surface of the inlet tube 45. The stopper plate 70 includes a fixing piece 71 arranged along the inlet tube 45, a claw-like stopper piece 72 formed by bending an upper portion of the fixing piece 71 and projecting the same in a horizontal direction (e.g., rearward), and an abutting piece 73 formed by swelling a lower portion of the fixing piece 71 rearward. The fixing piece 71 is formed at its central portion with a wedge-like rib 74 extending in a vertical direction, and the stopper piece 72 is formed at its tip end (rear end) with a short tongue piece 75.

The fixing piece 71 is fixed to the inlet tube 45 at the height at which a lower end of the abutting piece 73 of the stopper plate 70 abuts against an upper surface of the fixing flange 46 of the inlet tube 45. If the inlet sleeve 61 fitted in the inlet tube insertion hole 52 of the tank cover 32 is inserted in an outer periphery of the inlet tube 45, the stopper plate 70 is brought into alignment with the gate-shaped notch 65 of the inlet sleeve 61, so that the tongue piece 75 provided at the tip end of the stopper piece 72 is brought into engagement with the arch-like recess 67 formed in the lower surface of the upper flange 63 of the inlet sleeve 61.

The inlet tube insertion hole 52 of the tank cover 32 is formed at its inner periphery with a step 77 which is lower than the inner periphery of the inlet tube insertion hole 52 and which is aligned with a lower portion of the stopper piece 72 of the stopper plate 70. The step 77 is formed at its central portion with a notch 78 which corresponds to the rib 74.

The tank body 31 and the tank cover 32 are mounted to the body frame 2 in the following sequence. That is, the rear bracket 35 of the tank body 31 is first fixed to the body frame 2 by the screw 37 and, then, the inner diameter portion of the inlet sleeve 61 fitted in the inlet tube insertion hole 52 of the tank cover 32 is inserted into the inlet tube 45 of the tank body 31 so that the lower end of the inlet sleeve 61 abuts against the upper surface (the fixing flange 46) of the tank body 31. Then, the front end of the tank cover 32 is fixed, together with the front bracket 33 of the tank body 31, to the body frame 2 by the screw 36 and, finally, the fastening members 42 at the rear end of the tank cover 32 are fixed to the body frame 2 by the screws (not shown).

An outer diameter of the fitting groove 62 of the inlet sleeve 61 is formed slightly smaller than an inner diameter of the inlet tube insertion hole 52 of the tank cover 32, so that a slight gap between the tank body 31 and the tank cover 32 can be absorbed.

When the tank cover 32 is applied to the tank body 31, the step 77 is engaged with the tongue piece 75 by shifting the tank cover 32 in the forward direction after the mounting thereof to the tank body 31.

The fuel tank apparatus 26 is fabricated in the above-described manner. As in this fuel tank apparatus 26, if the inner diameter portion of the inlet sleeve 61 fitted into the inlet tube insertion hole 52 of the tank cover 32 is tightly inserted in the outer periphery of the inlet tube 45 of the tank body 31 and, then, the lower end of the inlet sleeve 61 abuts against the upper surface of the tank body 31, the movements of the tank cover 32 in its longitudinal, lateral and vertical directions with respect to the inlet tube 45 can be restricted by the inlet sleeve 61 to accurately position the inlet tube insertion hole 52 with respect to the inlet tube 45. Accordingly, an outer appearance can reliably be prevented from being spoiled due to a misalignment between the inlet tube 45 and the inlet tube insertion hole 52.

Further, since the claw-like stopper piece 72 provided on the inlet pipe 45 restricts an upward movement of the tank cover 32, it is also possible to reliably prevent the tank cover 32 from floating up when the rider drives the motorcycle such that the rider grips or sandwiches the fuel tank apparatus between his knees.

Furthermore, since the outer diameter of the flange portion 63 (64) of the inlet sleeve 61 is set larger than that of the grip 57 which is the maximum outer diameter portion of the inlet cap 53, the flange 63 exists between the tank cover 32 and the grip 57. Therefore, even if the tank cover 32 should float up from the tank body 31, the tank cover 32 itself does not abuts directly against the grip 57 of the inlet cap 53, thereby preventing the tank cover 32 from being damaged.

The stopper piece 72 provided on the inlet tube 45 is covered with the upper flange portion 63 of the inlet sleeve 61 and, hence, is not exposed outside. Therefore, an outer appearance is not spoiled.

It is to be noted that the present invention is not limited to the described embodiments and many other changes and modification may be made without departing from the scopes of the appended claims.

## Claims

1. A fuel tank apparatus for a motorcycle which is disposed between bilateral body frames of the motorcycle, in a standing state thereof, and comprises a tank body (31), a tank cover (32) formed independently from the tank body, an oil supply port (43) formed to an upper portion of the tank body and an inlet tube provided for the oil supply port so as to project upward from an inlet tube insertion hole (52) formed to the tank cover and closed by an inlet cap, characterized in that a cylindrical inlet sleeve (61) made of an elastic material is mounted to the inlet tube insertion hole (52), said inlet sleeve (61) being formed with a fitting groove (62) at an outer periphery of the inlet sleeve so as to extend in a circumferential direction thereof, said fitting groove (62) being fitted to an inner periphery of the inlet tube insertion hole (52) in a manner that an inner diameter portion of the inlet sleeve (61) is tightly inserted in an outer periphery of the inlet tube (45) so that a lower end portion of the inlet sleeve (61) abuts against an upper surface of the tank body (31), and said inlet tube (45) is provided at an outer peripheral surface thereof with a stopper member (70) mounted to the inlet tube (45) at a portion above the tank cover (32) to project in a horizontal direction.

2. A fuel tank apparatus for a motorcycle according to claim 1, wherein said inlet sleeve (61) is formed, at an outer peripheral portion thereof, with upper and lower flange portions (63 and 64) so as to define said fitting groove (62) between said flange portions (63 and 64), said upper flange portion (63) having an outer diameter being set larger than the maximum outer diameter portion of the inlet cap (53).

3. A fuel tank apparatus for a motorcycle according to claim 2, wherein said inlet sleeve (61) is formed with a cutout portion (65) so as to provide a cut-away portion to the lower flange portion (64).

4. A fuel tank apparatus for a motorcycle according to claim 3, wherein a plurality of ribs (66) are formed to the peripheral portion of the inlet sleeve so as to extend in an axial direction thereof.

5. A fuel tank apparatus for a motorcycle according to claim 3, wherein said upper flanged portion (63) is formed at a lower surface thereof with an arch-shaped recess in alignment with said cutout portion (65).

6. A fuel tank apparatus for a motorcycle according to claim 1, wherein said stopper member (70) has a plate structure and includes a fixing piece (71) arranged along the inlet tube, a claw-shaped stopper piece (72) formed by bending an upper portion of the fixing piece so as to project in a horizontal direction and an abutting piece (73) formed by swelling a lower portion of the fixing piece rearward.

7. A fuel tank apparatus for a motorcycle according to claim 6, wherein said fixing piece (71) is formed at a central portion thereof with a wedge-shaped rib (74) extending in a vertical direction and said stopper piece (72) has a tongue piece (75) formed at a tip end portion thereof.

## Patentansprüche

1. Kraftstofftank für ein Motorrad, angeordnet zwischen beidseitigen Rahmenteilen des Motorrads in aufrechtem Zustand, umfassend einen Tankkörper (31), eine unabhängig von dem Tankkörper ausgebildete Tankabdeckung (32), eine in einem oberen Teil des Tankkörpers ausgebildete Ölzufuhröffnung (43) und einen Einlaßstutzen für die Ölzufuhröffnung, die von einem in der Tankabdeckung ausgebildeten Einzelstutzen-Aufnahmeloch (52) vorsteht und von einem Einlaßverschluß verschlossen wird, **dadurch gekennzeichnet**, daß eine aus elastischem Material bestehende zylindrische Einlaßmuffe (61) an dem Einlaßstutzen-Aufnahmeloch (52) angeordnet ist, daß die Einlaßmuffe (61) mit einer Paßnut (62) am Außenumfang der Einlaßmuffe ausgestattet ist, die sich in deren Umfangsrichtung erstreckt, wobei die Paßnut (62) an einen Innenumfang des Einlaßstutzen-Aufnahmelochs (52) in der Weise angepaßt ist, daß ein Innendurchmesserteil der Einlaßmuffe (61) fest an einem Außenumfang des Einlaßstutzens (42) anliegt, so daß ein unterer Endbereich der Einlaßmuffe (61) gegen eine Oberseite des Tankkörpers (31) anliegt, und der Einlaßstutzen (45) an seiner Außenumfangsfläche mit einem an dem Einlaßstutzen (45) an einem Bereich oberhalb der Tankabdeckung (32) angeordneten Anschlagglied (70) ausgestattet ist, welches in horizontaler Richtung vorsteht.

2. Kraftstofftank für ein Motorrad nach Anspruch 1, bei dem die Einlaßmuffe (61) an ihrem Außenumfang mit einem oberen und einem unteren Flanschelement (63 und 64) ausgestattet ist, um zwischen den Flanschelementen (63 und 64) die Paßnut (62) zu bilden, wobei das obere Flanschelement (63) einen Außendurchmesser besitzt, der größer ist als der maximale Außendurchmesser des Einlaßverschlusses (53).

3. Kraftstofftank für ein Motorrad nach Anspruch 2, bei dem die Einlaßmuffe (61) einen Ausschnittsbereich (65) aufweist, um für das untere Flanschelement (64) einen freien Bereich zu bilden.

4. Kraftstofftank für ein Motorrad nach Anspruch 3, bei dem mehrere Rippen (66) am Umfang der Einlaßmuffe ausgebildet sind, welche sich in deren Axialrichtung erstrecken.

5. Tank für ein Motorrad nach Anspruch 3, bei dem das obere Flanschelement (63) an seiner Unterseite mit einer bogenförmigen Ausnehmung ausgestattet ist, die mit dem Ausschnittsbereich (65) fluchtet.

6. Tank für ein Motorrad nach Anspruch 1, bei dem das Anschlagelement (70) eine plattenähnliche Struktur aufweist und ein Fixierstück (71) enthält, welches entlang dem Einlaßstutzen verläuft, außerdem ein klauenähnliches Anschlagstück (72), gebildet durch Biegen eines oberen Teils des Fixierstücks, so daß es in horizontaler Richtung absteht, und ein Widerlagerstück (73) aufweist, gebildet durch Auswölben eines unteren Bereichs des Fixierstücks nach hinten.

7. Kraftstofftank für ein Motorrad nach Anspruch 6, bei dem das Fixierstück (71) in seinem mittleren Bereich eine keilförmige Rippe (74) aufweist, die sich in vertikaler Richtung erstreckt, wobei das Anschlagstück (72) an seinem Ende ein Zungenteil (75) ausgebildet hat.

## Revendications

1. Dispositif de réservoir à carburant destiné à un motocycle qui est disposé entre des cadres bilatéraux du motocycle, dans un état de fixation de ceux-ci, et qui comprend un corps de réservoir (31), un capot de réservoir (32) formé de manière indépendante du corps de réservoir; un orifice d'alimentation en carburant (43) formé sur une partie supérieure du corps de réservoir et un tube d'admission destiné à l'orifice d'alimentation en carburant de manière à saillir vers le haut à partir d'un orifice d'introduction de tube d'admission (52) formé sur le capot de réservoir et fermé par un bouchon d'admission, caractérisé en ce qu'un manchon cylindrique d'admission (61) se composant d'un matériau élastique est monté sur l'orifice d'introduction de tube d'admission (52), ledit manchon d'admission (61) étant formé avec une gorge d'ajustage (62) située sur une périphérie extérieure du manchon d'admission de manière à s'étendre dans le sens de la circonférence de celui-ci, ladite gorge d'ajustage (62) étant ajustée sur une périphérie intérieure de l'orifice d'introduction de tube d'admission (52) de sorte qu'une partie de diamètre intérieur du manchon d'admission (61) est introduite de manière hermétique dans une périphérie extérieure du tube d'admission (45) de telle sorte qu'une partie d'extrémité inférieure du manchon d'admission (61) est en butée contre une surface supérieure du corps de réservoir (31), et ledit tube d'admission (45) comporte sur une surface périphérique extérieure de celui-ci un élément d'arrêt (70) monté sur le tube d'admission (45) sur une partie située au-dessus du capot de réservoir (32) afin de saillir horizontalement.

2. Dispositif de réservoir à carburant destiné à un motocycle selon la revendication 1, dans lequel ledit manchon d'admission (61) est formé, à une partie périphérique extérieure de celui-ci, avec des parties de bride supérieure et inférieure (63) et (64) de manière à définir ladite gorge d'ajustage (62) entre lesdites parties de bride (63) et (64), ladite partie de bride supérieure (63) ayant un diamètre extérieur qui est plus grand que la partie de diamètre extérieur maximale du bouchon d'admission (53).

3. Dispositif de réservoir à carburant destiné à un motocycle selon la revendication 2, dans lequel ledit manchon d'admission (61) est formé avec une partie découpée (65) de manière à fournir une partie en encoche sur la partie de bride inférieure (64).

4. Dispositif de réservoir à carburant destiné à un motocycle selon la revendication 3, dans lequel une pluralité de nervures (66) est formée sur la partie périphérique du manchon d'admission de manière à s'étendre dans le sens axial de celui-ci.

5. Dispositif de réservoir à carburant destiné à un motocycle selon la revendication 3, dans lequel ladite partie de bride supérieure (63) comporte sur la surface inférieure de celle-ci un retrait en forme d'arc de cercle en alignement avec ladite partie découpée (65).

6. Dispositif de réservoir à carburant destiné à un motocycle selon la revendication 1, dans lequel ledit élément d'arrêt (70) a une structure en forme de plaque et comprend une pièce de fixation (71) disposée le long du tube d'admission, une pièce d'arrêt (72) en forme de griffe formée par courbure d'une partie supérieure de la pièce de fixation de manière à saillir horizontalement et une pièce de butée (73) formée par bombage vers l'arrière d'une partie inférieure de la pièce de fixation.

7. Dispositif de réservoir à carburant destiné à un motocycle selon la revendication 6, dans lequel ladite pièce de fixation (71) comporte, sur une partie centrale de celle-ci, une nervure en forme de coin (74) qui s'étend dans le sens vertical et ladite pièce d'arrêt (72) comporte une pièce en forme de languette (75) formée sur une partie d'extrémité de celle-ci.
